# FASCICULE DE BREVET EUROPEEN

(11) **EP 0 767 925 B1**
(45) Date de publication et mention de la délivrance du brevet: **05.08.1998**
(21) Numéro de dépôt: 95923400.6
(22) Date de dépôt: 16.06.1995
(51) Int. Cl.: G02B 23/12

(54) **JUMELLE COMPACTE DE VISION NOCTURNE**
KOMPAKTES ZWEIÄUGIGES NACHTSICHTFERNROHR
COMPACT NIGHT VISION BINOCULARS

(30) Priorité: 28.06.1994 FR 9407951
(43) Date de publication de la demande: 16.04.1997
(73) Titulaire: ANGENIEUX S.A., F-45570 Saint-Héand (FR)
(72) Inventeur: ESPIE, Jean-Luc, F-92402 Courbevoie Cédex (FR); COUMERT, Bruno, F-92402 Courbevoie Cédex (FR)
(74) Mandataire: Lincot, Georges
(86) Numéro de dépôt international: FR9500799
(87) Numéro de publication internationale: WO9600924

(56) Documents cités:
- GB-A- 918 213
- GB-A- 2 006 463
- GB-A- 2 065 325
- US-A- 4 737 023
- US-A- 4 826 302

## Description

L'invention concerne la vision nocturne, c'est-à-dire l'observation d'une scène dans des conditions d'éclairement très faibles, fourni par exemple par la lumière stellaire ou lunaire, et sans éclairage additionnel de la scène.

Les systèmes de vision nocturne sont conçus pour être portés à la main ou pour permettre une utilisation mains libres. Dans ce dernier cas, le système de vision est fixé au visage de l'utilisateur à l'aide d'un masque de soutien équipé de sangles ou sur un véhicule comme c'est le cas par exemple pour les périscopes infrarouges du type décrit par exemple dans le brevet GB 918213.

Les dispositifs de vision portés à la main sont principalement destinés à une observation éloignée, et intègrent une combinaison optique capable de grossir plusieurs fois le champ observé. En revanche, les systèmes de vision nocturne de type main libre, destinés au déplacement, à la conduite de véhicule ou à la réalisation de travaux nocturnes, présentent un grossissement égal à l'unité de façon à offrir des conditions de vision naturelles. L'invention est particulièrement, mais non exclusivement, destinée à ce type d'application.

Les systèmes de vision nocturne sont classiquement basés sur la mise en oeuvre d'un tube intensificateur d'images, comportant une photocathode servant de surface d'entrée, un système de transfert et de multiplication d'électrons à microcanaux, et d'un écran à phosphore servant de surface de sortie. Un objectif à grande ouverture forme une image de la scène observée sur la surface d'entrée, puis l'image est intensifiée électroniquement, et enfin restituée sur l'écran de phosphore pour être observée au travers d'un ensemble oculaire.

La vision bioculaire est obtenue en répartissant le flux sortant du tube sur deux voies oculaires à l'aide d'un séparateur optique.

La nécessité de fixer les équipements de conduite de nuit sur la tête entraîne la présence de contraintes ergonomiques importantes. En effet, la masse de l'équipement et sa forme protubérante, du fait de l'alignement des éléments - objectif, tube, oculaire - sur un axe de visée, entraînent un déplacement du centre de gravité de la tête et en modifient les caractéristiques d'inertie, ce qui engendre des problèmes de fatigue au niveau du cou. D'autre part, la présence de cette protubérance relativement longue (classiquement compris entre 100 et 170 mm) et fragile, réduit la mobilité de l'utilisateur, notamment pour des déplacements dans des conditions difficiles ou pour la conduite de véhicule.

Pour résoudre ce problème, il est connu du brevet US 4826302 un système optique coudé dans lequel l'objectif et l'intensificateur sont orientés selon un axe horizontal perpendiculaire à l'axe de visée. De ce fait, la dimension de l'équipement selon l'axe de visée est réduite et le centre de gravité de l'ensemble est déplacé vers l'observateur. Cependant, cette conception nécessite la mise en oeuvre d'un nombre important de réflexions sur chacune des voies optiques.

L'invention vise à obtenir une jumelle de vision nocturne encore plus compacte, et mettant en oeuvre un nombre réduit d'éléments optiques.

Pour atteindre ces objectifs, l'invention est basée sur la mise en place d'une voie optique principale inclinée par rapport au plan des axes optiques des oculaires et aboutissant à une première voie oculaire, sur laquelle vient se greffer une seconde voie oculaire.

Plus précisément, l'invention a pour objet une jumelle de vision nocturne comportant un objectif d'entrée conjugué à un tube intensificateur de lumière pour former une image de scène à partir d'un flux lumineux provenant de la scène selon un axe de visée, une image intensifiée étant ensuite transmise par un transport d'image et par un séparateur optique qui transmet partiellement le flux par transmission et réflexion respectivement sur une première voie vers un premier oculaire et sur une seconde voie, qui est coudée deux fois, vers un deuxième oculaire, les oculaires présentant des axes parallèles à l'axe de visée, caractérisée en ce que le tube et le transport d'image sont alignés pour constituer une voie optique principale selon un axe optique principal situé dans un plan perpendiculaire à l'axe de visée et incliné par rapport au plan des axes des oculaires, en ce que la seconde voie oculaire, qui est coudée deux fois, présente un axe situé dans le plan perpendiculaire à l'axe de visée et passant par l'axe de la voie principale.

Selon un premier exemple de réalisation, la transmission de flux est réalisée à l'aide d'une optique de transport d'image composée d'un premier élément situé entre le tube et le séparateur et d'un second élément situé sur chacune des voies oculaires. Cette combinaison optique forme donc deux optiques de transport d'image, un transport par transmission à travers le séparateur et un transport par réflexion sur le séparateur, respectivement sur la première et la seconde voie oculaire. Chaque transport d'image forme avec l'oculaire conjugué un ensemble oculaire, de préférence de type microscope.

Avantageusement, la transmission du flux sur la seconde voie oculaire est réalisée soit à l'aide d'éléments optiques constituant un seul transport d'images couplé à deux prismes en toit, soit à l'aide de deux transports d'images couplés à deux réflecteurs plans.

Selon un deuxième exemple de réalisation, le tube intensificateur est à fibres inverseuses d'image. Avantageusement, les prismes en toit de la seconde voie oculaire sont alors remplacés par des réflecteurs plans. De plus, la transmission du flux sur la première voie oculaire peut être réalisée par un ensemble ;oculaire constituant une optique de type loupe qui reprend directement l'image de l'écran du tube.

D'autres caractéristiques et avantages apparaîtront à la lecture de la description qui suit, accompagnée des figures annexées qui représentent respectivement :
- la figure 1, un premier exemple de réalisation de la jumelle de vision nocturne selon l'invention ;
- la figure 2, un deuxième exemple de réalisation de la jumelle selon l'invention.

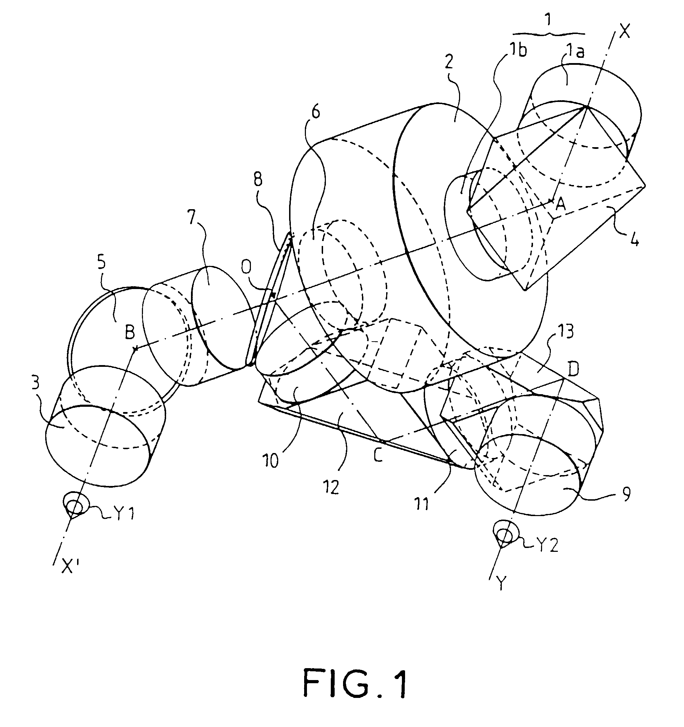

Le premier exemple de réalisation, illustré par la figure 1, montre l'agencement de base proposé par l'invention: une voie optique principale d'axe XAOBX', coudé en A et B et articulé autour de trois axes, l'axe de visée AX de la jumelle, l'axe optique AB de révolution de l'intensificateur du lumière 2, et l'axe optique BX' d'un premier oculaire 3, de l'oculaire de l'oeil gauche dans l'exemple illustré. Un objectif d'entrée 1 peut être disposé soit sur l'axe de visée AX soit sur l'axe du tube 2. Il peut également, comme illustré, être composé de deux éléments 1ₐ et 1_{b}, le premier étant situé sur l'axe de visée AX, et le second sur l'axe du tube 2.

L'objectif et l'oculaire sont coudés, respectivement :
- en A à l'aide d'un réflecteur plan 4 disposé entre les éléments optiques d'entrée 1ₐ et 1_{b} constituant alors un objectif coudé ;
- en B à l'aide d'un second réflecteur plan 5, parallèle au premier réflecteur 4, de sorte que les deux réflecteurs forment un rhomboèdre, l'axe optique BX' de l'oculaire étant alors parallèle à l'axe de visée AX.

Entre l'intensificateur de lumière 2 et l'oculaire 3, il est prévu une combinaison optique à transport d'image pour la transmission du flux de lumière provenant de la scène observée. Dans ce premier exemple de réalisation, ce transport d'images est composé de deux éléments optiques 6 et 7, les éléments optiques 6 et 7 et l'oculaire 3 étant optiquement calculés pour former par exemple un ensemble oculaire de type microscope, c'est-à-dire avec formation d'une image intermédiaire.

Afin de constituer une seconde voie optique oculaire allant vers l'autre oeil, l'oeil droit dans le cas de l'exemple illustré, il est prévu au point 0 du tronçon central AB de la voie principale, un séparateur de voies incliné 8 qui dévie une moitié du flux de lumière incident vers un second oculaire 9, en l'occurrence l'oculaire de l'oeil droit.

Deux voies oculaires sont ainsi créées à partir du séparateur 8 : une première voie oculaire d'axe OBX', pour l'oeil gauche dans l'exemple illustré à la figure 1, et une seconde voie oculaire d'axe OCDY pour l'oeil droit.

La première voie oculaire, constitué par le transport d'image 6, 7 et l'oculaire3, prolonge la voie principale et le flux lumineux est transmis partiellement sur cette voie à travers le séparateur de voie. La seconde voie est empruntée par le flux lumineux réfléchi par le séparateur 8.

Afin de transmettre la lumière jusqu'au second oculaire, la seconde voie oculaire comporte une optique de transport d'images : par exemple des éléments optiques 10 et 11 sont placés entre le séparateur 8 et le second oculaire 9, et sont calculés de sorte que les éléments optiques 6, 10 et 11 constituent une seule optique de transport d'image. Le transport d'image 6, 10, 11 forme également avec l'oculaire 9 un ensemble oculaire de type microscopique. Dans ces conditions, les deux voies oculaires sont constituées chacune d'un transport d'image ayant un élément commun, l'élément 6, et d'un oculaire.

Le terme "élément optique" utilisé dans cet exposé signifie groupe optique ou lentille composée d'un nombre adapté de lentilles minces (au moins une) dont les caractéristiques géométriques et optiques sont calculées afin d'obtenir les effets optiques voulus (convergence, correction des aberrations optiques). Le calcul optique relève de la compétence de l'Homme de l'Art.

La voie optique secondaire qui vient se greffer au point 0 sur la voie optique principale X'OX présente dans l'exemple de réalisation, à partir du séparateur de voies 8, un axe optique OCDY également coudé deux fois autour de trois tronçons. L'axe optique du second oculaire 9, qui coïncide avec le tronçon DY de la voie optique secondaire, est parallèle à l'axe optique BX' du premier oculaire 3. Dans ces conditions, les axes des oculaires BX' et DY sont parallèles et sont alignés avec les axes de vision des yeux de l'observateur Y1 et Y2. Les axes BX' et DY définissent ainsi un plan de vision de référence pour l'utilisateur, en général horizontal.

Pour obtenir une orientation correcte de l'image en sortie des oculaires, l'intensificateur est un tube sans inversion d'image

Dans l'exemple de réalisation illustré, le premier coudage optique C de la voie seconde oculaire est réalisé à l'aide d'un prisme en toit 12, situé entre les deux éléments 10 et 11 du transport d'images, et le second coudage D à l'aide d'un second prisme en toit 13, situé entre le dernier élément 11 de ce transport d'images et le second oculaire 9. Les axes optiques des portions finales des voies principale et secondaire, BX' et DY, qui coïncident avec les axes optiques de révolution des oculaires, sont ainsi rendus parallèles à l'axe de la visée AX et définissent un plan horizontal.

Dans cet exemple de réalisation, les réflecteurs et les prismes sont disposés à 45° sur les axes optiques, de sorte que les coudages optiques forment chacun un angle de 90°. Le séparateur de voies 8 est disposé de manière inclinée sur la portion centrale AB , de sorte que l'axe optique OC du flux lumineux dévié par le séparateur 8 est perpendiculaire à l'axe AB de l'intensificateur 2, et que les portions d'axe AB et OC sont dans un même plan perpendiculaire à l'axe de visée AX.

La séparation de voies, réalisée par division du flux lumineux, peut être obtenue soit par séparation de pupilles, par exemple en utilisant un élément réfléchissant sur une demi-pupille de la voie optique principale, soit en mettant en oeuvre un traitement semi-réfléchissant ou séparateur de bandes spectrales, déposé sur une lame plane ou un cube séparateur.

Les réflecteurs plans sont, quant à eux, réalisés à partir de toute technique connue de l'Homme de l'Art, par exemple à partir de lames planes ayant subi un traitement réfléchissant (métallique, diélectrique ou holographique), ou à partir de prismes en demi cube, utilisés en réflexion totale ou ayant subi un traitement réfléchissant du même type.

L'architecture optique qui vient d'être décrite est réalisée de sorte que le tronçon principal AB de l'axe optique principal est incliné d'un angle d'environ 30° au-dessus du plan horizontal formé par les axes optiques des oculaires. C'est cette inclinaison qui permet de dégager un espace suffisant pour insérer, sous la voie optique principale couplée au premier oculaire, une seconde voie optique couplée au second oculaire. Cette inclinaison permet ainsi de gérer au mieux l'espace de manière à obtenir un encombrement minimal.

Selon une variante de réalisation de la voie oculaire droite couplée à l'oculaire droit, les prismes en toit sont remplacés par des réflecteurs plans et le transport d'images, constitué par les trois éléments 6, 10 et 11 est remplacé par deux transports d'image. Un premier transport composé des éléments 6 et 10, qui forme au niveau du réflecteur 12 une image intermédiaire de l'écran de l'intensificateur, et un second transport composé par l'élément 11 qui reprend cette image pour fournir une image redressée à l'oculaire droit 9.

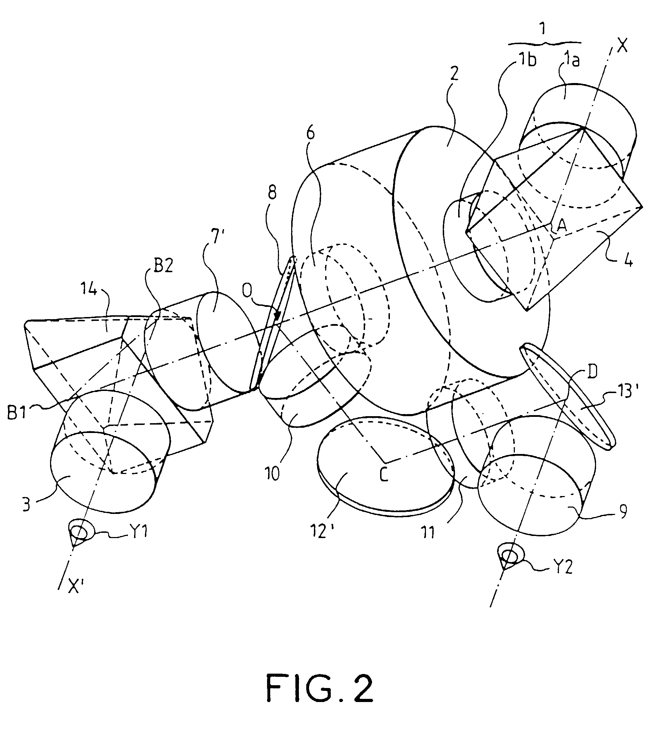

Un autre exemple de réalisation, illustrée à la figure 2, où les éléments communs avec ceux de la figure 1 sont indiqués par les mêmes signes de référence, est basé sur l'utilisation d'un intensificateur à inversion d'image. Cette inversion, qui correspond à une rotation de l'image de 180° dans son plan, est obtenue grâce à des fibres optiques dites inverseuses, intégrées à l'intensificateur, selon des techniques. Dans ces conditions, et afin de fournir des images redressées aux oculaires , le réflecteur plan 5 de la figure 1 est remplacé par un pentaprisme en toit 14, le coudage B étant alors obtenu à l'aide d'une triple réflexion en B1, B2 et B3 pour retourner l'image, et les prismes en toit 12 et 13 de la voie oculaire secondaire sont remplacés par deux réflecteurs plans, respectivement 12' et 13'.

Selon une variante de ce second exemple de réalisation et afin de réduire l'encombrement, le pentaprisme 14 peut être remplacé par un réflecteur plan, tel que le réflecteur 5 de la figure 1. D'autre part, le transport d'images de la voie principale, constitué par les éléments 6 et 7, est calculé de sorte que les éléments 6, 7 et 3 forme un seul ensemble oculaire de type loupe, c'est-à-dire sans formation d'image intermédiaire et sans apparition d'anneaux oculaires. Cette solution devient extrêmement compacte car les éléments 3, 6 et 7 sont alors de dimensions très réduites en épaisseur.

L'invention n'est pas limitée aux exemples décrits et illustrés : il est possible d'inverser les voies droite et gauche par rapport aux solutions précédemment décrites ; il est également possible de disposer l'axe optique principal sous le plan horizontal des axes des oculaires, en réalisant une combinaison optique de même type, mais symétrique par rapport à ce plan.

## Revendications

1. Jumelle de vision nocturne comportant un objectif d'entrée (1) conjugué à un tube intensificateur de lumière (2) pour former une image de scène à partir d'un flux lumineux provenant de la scène selon un axe de visée (AX), une image intensifiée étant ensuite transmise par un transport d'image (6,7 6,7') et par un séparateur optique (8) qui transmet partiellement le flux par transmission et réflexion respectivement sur une première voie vers un premier oculaire (3) et sur une seconde voie, qui est coudée deux fois, vers un deuxième oculaire (9), les oculaires (3,9) présentant des axes parallèles à l'axe de visée, caractérisée en ce que le tube (2) et le transport d'image (6,7 ; 6,7') sont alignés pour constituer une voie optique principale selon un axe optique principal (A,B ; A,B1) situé dans un plan perpendiculaire à l'axe de visée (AX) et incliné par rapport au plan des axes (BX',DY2) des oculaires (3,9), en ce que la seconde voie oculaire, qui est coudée deux fois, présente un axe (OCD) situé dans le plan perpendiculaire à l'axe de visée (AX) et passant par l'axe (AB) de la voie principale.

2. Jumelle selon la revendication 1, caractérisée en ce que le transport d'image comporte un premier élément optique commun (6) situé entre le tube (2) et le séparateur optique (8) et deux seconds éléments (7 ; 10 ; 10,11) situés sur chacune des voies oculaires, le séparateur de voies (8) étant disposé entre le premier et les seconds éléments.

3. Jumelle selon la revendication 2, caractérisée en ce que le tube (2) est un tube intensificateur sans inversion d'image et en ce que le premier oculaire (3) est coudé par un réflecteur plan (5).

4. Jumelle selon la revendication 3, caractérisée en ce que le flux est transmis sur la seconde voie oculaire (OCDY) à l'aide d'éléments optiques (6, 10, 11) constituant un seul transport d'image optiquement couplé à deux prismes en toit (12, 13).

5. Jumelle selon la revendication 3, caractérisée en ce que le flux est transmis sur la seconde voie oculaire (OCDY) à l'aide d'éléments optiques constituant deux transports d'image (6, 10; 11) optiquement couplés à deux réflecteurs plans.

6. Jumelle selon la revendication 1, caractérisée en ce que le tube (2) est un tube intensificateur inverseur d'image et en ce que le flux est transmis sur la seconde voie oculaire (OCDY) par des éléments optiques (6, 10, 11) constituant un seul transport d'image optiquement couplé à deux réflecteurs plan (12', 13').

7. Jumelle selon la revendication 6, caractérisée en ce que le coudage optique est réalisé sur la première voie oculaire (OBX') par réflexion sur un réflecteur en toit (14) de type pentaprisme.

8. Jumelle selon la revendication 6, caractérisée en ce que le flux est transmis sur la première voie oculaire (OBX') à l'aide d'éléments optiques (3, 6, 7) constituant un oculaire de type loupe pour une transmission directe de l'image formée par le tube (2) et en ce que le coudage oculaire est réalisé par un réflecteur plan sur cette première voie.

## Patentansprüche

1. Nachtsicht-Fernglas, mit einem Eingangsobjektiv (1), das mit einer Lichtverstärkerröhre (2) verbunden ist, um anhand eines von einer Szene längs einer Visierachse (AX) ausgehenden Lichtstroms ein Bild der Szene zu erzeugen, wobei ein verstärktes Bild anschließend durch eine Bildtransporteinrichtung (6, 7; 6, 7') und durch einen optischen Teiler (8) übertragen wird, der den Strom mittels Durchlassung bzw. Reflexion zum Teil auf einem ersten Weg zu einem ersten Okular (3) und zum Teil auf einem zweiten, zweifach abgewinkelten Weg zu einem zweiten Okular (9) überträgt, wobei die Okulare (3, 9) zur Visierachse parallele Achsen aufweisen, dadurch gekennzeichnet, daß die Röhre (2) und die Bildtransporteinrichtung (6, 7; 6, 7') so ausgerichtet sind, daß längs einer optischen Hauptachse (A, B; A, B1), die in einer zur Visierachse (AX) senkrechten Ebene liegt und in bezug auf die Ebene der Achsen (BX', DY2) der Okulare (3, 9) geneigt ist, ein optischer Hauptweg erzeugt wird, und daß der zweite, zweifach abgewinkelte Okularweg eine Achse (OCD) aufweist, die in der zur Visierachse (AX) senkrechten Ebene liegt und durch die Achse (AB) des Hauptwegs verläuft.

2. Fernglas nach Anspruch 1, dadurch gekennzeichnet, daß die Bildtransporteinrichtung ein erstes gemeinsames optisches Element (6), das sich zwischen der Röhre (2) und dem optischen Teiler (8) befindet, und zwei zweite Elemente (7; 10; 10, 11) enthält, die sich in den jeweiligen Okularwegen befinden, wobei der Wegteiler (8) zwischen dem ersten und den zweiten Elementen angeordnet ist.

3. Fernglas nach Anspruch 2, dadurch gekennzeichnet, daß die Röhre (2) eine Verstärkerröhre ohne Bildumkehr ist und daß das erste Okular (3) durch einen ebenen Reflektor (5) abgewinkelt ist.

4. Fernglas nach Anspruch 3, dadurch gekennzeichnet, daß der Strom über den zweiten Okularweg (OCDY) mit Hilfe optischer Elemente (6, 10, 11) übertragen wird, die eine einzelne optische Bildtransporteinrichtung bilden, die mit zwei Dachprismen (12, 13) optisch gekoppelt ist.

5. Fernglas nach Anspruch 3, dadurch gekennzeichnet, daß der Strom über den zweiten Okularweg (OCDY) mit Hilfe optischer Elemente übertragen wird, die zwei Transporteinrichtungen (6, 10; 11) bilden, die mit zwei ebenen Reflektoren optisch gekoppelt sind.

6. Fernglas nach Anspruch 1, dadurch gekennzeichnet, daß die Röhre (2) eine Verstärkerröhre mit Bildumkehr ist und daß der Strom über den zweiten Okularweg (OCDY) durch optische Elemente (6, 10, 11) übertragen wird, die eine einzelne Bildtransporteinrichtung bilden, die mit zwei ebenen Reflektoren (12', 13') optisch gekoppelt ist.

7. Fernglas nach Anspruch 6, dadurch gekennzeichnet, daß die optische Abwinkelung im ersten Okularweg (OBX') durch Reflexion an einem Dachreflektor (14) vom Typ Pentaprisma verwirklicht ist.

8. Fernglas nach Anspruch 6, dadurch gekennzeichnet, daß der Strom über den ersten Okularweg (OBX') mit Hilfe optischer Elemente (3, 6, 7) übertragen wird, die ein Okular des Lupentyps für eine direkte Übertragung des durch die Röhre (2) erzeugten Bildes bilden, und daß die Okularabwinkelung durch einen ebenen Reflektor in diesem ersten Weg verwirklicht ist.

## Claims

1. Binoculars for nighttime vision including an entrance objective (1) conjugate with a light-intensifier tube (2) for forming an image of a scene from light flux originating from the scene along a viewing axis (AX), an intensified image next being transmitted by an image transport (6, 7; 6, 7') and by an optical splitter (8) which partially transmits the flux by transmission and reflection respectively on a first pathway to a first eyepiece (3) and on a second pathway, which is bent twice, to a second eyepiece (9), the eyepieces (3, 9) having axes parallel to the viewing axis, characterized in that the tube (2) and the image transport (6, 7; 6, 7') are aligned so as to constitute a principal optical pathway along a principal optical axis (A, B; A, B1) lying in a plane perpendicular to the viewing axis (AX) and inclined with respect to the plane of the axes (BX', DY2) of the eyepieces (3, 9), in that the second eyepiece pathway, which is bent twice and which has an axis (OCD) lying in the plane perpendicular to the viewing axis (AX) and passing through the axis (AB) of the principal pathway.

2. Binoculars according to Claim 1, characterized in that the image transport includes a first common optical element (6) located between the tube (2) and the pathway splitter (8) and two second elements (7; 10; 10, 11) located on each of the eyepiece pathways, the pathway splitter (8) being disposed between the first element and the second elements.

3. Binoculars according to Claim 2, characterized in that the tube (2) is an intensifier tube without image inversion and in that the bend of the first eyepiece (3) is bent by a plane reflector (5).

4. Binoculars according to Claim 3, characterized in that the flux is transmitted on the second eyepiece pathway (OCDY), with the aid of optical elements (6, 10, 11) constituting a single image transport optically coupled to two roof prisms (12, 13).

5. Binoculars according to Claim 3, characterized in that the flux is transmitted on the second eyepiece pathway (OCDY), with the aid of optical elements constituting two image transports (6, 10; 11) optically coupled to two plane reflectors.

6. Binoculars according to Claim 1, characterized in that the tube (2) is an image inverting intensifier tube and in that the flux is transmitted on the second eyepiece pathway (OCDY) by optical elements (6, 10, 11) constituting a single image transport optically coupled to two plane reflectors (12', 13').

7. Binoculars according to Claim 6, characterized in that the optical bend is effected on the first eyepiece pathway (OBX') by reflection on a roof reflector (14) of pentaprism type.

8. Binoculars according to Claim 6, characterized in that the flux is transmitted on the first eyepiece pathway (OBX') with the aid of optical elements (3, 6, 7) constituting an eyepiece of the magnifying glass type for direct transmission of the image formed by the tube (2) and in that the eyepiece bend is effected by a plane reflector on this first pathway.
